# EUROPÄISCHE PATENTSCHRIFT

(11) **EP 2 829 762 B1**
(45) Veröffentlichungstag und Bekanntmachung des Hinweises auf die Patenterteilung: **24.08.2016**
(21) Anmeldenummer: 14174879.8
(22) Anmeldetag: 30.06.2014
(51) Int. Cl.: F16C 41/00, F16D 27/10, F16D 15/00

(54) **Integriertes schaltbares Wellenlager**
Integrated switchable shaft bearing
Palier d'arbre commutable intégré

(30) Priorität: 26.07.2013 US 201361858792 P
(43) Veröffentlichungstag der Anmeldung: 28.01.2015
(73) Patentinhaber: Schaeffler Technologies AG & Co. KG, 91074 Herzogenaurach (DE)
(72) Erfinder: Russalian, Vigel, Macomb, MI 48044 (US)

(56) Entgegenhaltungen:
- DE-C- 98 060
- DE-C1- 3 830 200
- GB-A- 967 863
- GB-A- 2 465 999

## Beschreibung

### Gebiet der Erfindung

Die vorliegende Erfindung betrifft eine schaltbare Lageranordnung zur Drehmomentübertragung. Eine derartige schaltbare Lageranordnung ist z.B. aus DE98060C oder GB 2465999 A bekannt.

### Hintergrund der Erfindung

In Anwendungen auf dem Gebiet vom KFZ-Bau gibt es einen steigenden Bedarf an Energieeffizienz. Da ein ständiger Betrieb einiger Hilfsaggregate für Brennkraftmaschinen in Kraftfahrzeugen nicht erforderlich ist, hat man in der Vergangenheit stärkere Bemühungen unternommen, um diese Hilfsaggregate abzuschalten, wenn sie nicht im Einsatz sind. Bisher wurden solche Aggregate durch Riemen- oder Kettentriebe an den Motorantrieb angeschlossen und befanden sich in eingeschaltetem Zustand während des Betriebs des Motors unabhängig davon, ob dies nötig war oder nicht. Dadurch wird die Effizienz des KFZ beeinträchtigt, insbesondere in Hinsicht auf den Kraftstoffverbrauch.

Es kann zusätzliche Effektivität erreicht werden zum Beispiel, wenn eine Wasserpumpe bei Kaltstart eines Motors abgeschaltet bleibt, damit der Motor die Betriebstemperatur schneller erreichen kann, so dass die Effektivität gesteigert wird. Systeme zum Abschalten einer Wasserpumpe weisen u.a. einen Deckel auf, der die Flügel des Flügelrads abdeckt, wenn die Wasserpumpe nicht benötigt wird. In solchen Systemen wird jedoch die Wasserpumpe ständig durch den Ketten- oder Riementrieb angetrieben, aber das Kühlmittel wird nicht durch die Kühlmäntel des Motors gepumpt, da der Deckel die Flügel des Flügelrads abdeckt. Gemäß einer anderen bekannten Lösung ist eine elektromagnetische Kupplung zwischen dem Lager und der Antriebsscheibe der Wasserpumpe vorgesehen. Diese Lösung benötigt jedoch zusätzlichen Raum und besitzt nachteilig ein höheres Gewicht. Weiterhin sind zusätzliche Teile erforderlich, um Funktionalität zu erlangen. Aufgrund der Tatsache, dass die Betriebsweise von konventionellen magnetischen/mechanischen Kupplungssystemen übernommen und angepasst wird, ist die für den Betrieb benötigte Energie auch vergleichsweise hoch.

Es wäre wünschenswert, eine Kupplungsfunktion zum Abschalten von Nebenaggregaten des Antriebs vorzusehen, wenn diese nicht benötigt werden insbesondere in Zusammenhang mit Brennkraftmaschinen für KFZ, die einen kleinen Einbauraum benötigen, niedriges Gewicht haben und kostengünstig hergestellt werden können.

### Zusammenfassung

Um es kurz zu fassen, die Erfindung stellt ein integriertes schaltbares Wellenlager zur Verfügung, welches einen mit einer Laufbahn versehenen Innenring, eine sich über den Umfang erstreckende Kupplungsnut, welche die Laufbahn an mindestens einer Stelle schneidet, und sich axial erstreckende Öffnungen für Nockenstifte aufweist. Ein eine Laufbahn aufweisender Außenring ist um den Innenring angeordnet, und Wälzkörper sind zwischen dem Innen- und dem Außenring in den Laufbahnen angeordnet. Ein mit Kupplungsfindern versehener Kupplungsring ist in der Kupplungsnut angeordnet. Die Kupplungsfinger weisen einander benachbarte Freiräume auf, die auf die Öffnungen für Stifte ausgerichtet sind. Nockenstifte sind in den Öffnungen für Stifte angeordnet und weisen jeweils einen Nockenabschnitt auf. Es ist ein Aktuator vorgesehen, der die Nockenstifte aus einer Eingriffsstellung, in der die Nockenabschnitte jeweils mit einem der Kupplungsfinger in Eingriff stehen und die Kupplungsfinger nach außen in eine gelöste Stellung zwängen, die oberhalb einer Lauffläche des Innenrings liegt, so dass die Kupplungsfinger mit den Wälzkörpern in Eingriff kommen, wodurch ein Drehmoment vom Außenring auf den Innenring übertragen wird. In der gelösten Stellung sind die Nockenabschnitte der Nockenstifte außer Eingriff mit den Kupplungsfingern, weiche sich jetzt in eine unterhalb der Lauffläche des Innenrings liegende Stelle bewegen, so dass die Wälzkörper sich auf der Laufbahn des Innenrings bewegen können und der Außenring sich mittels der Wälzkörper in Bezug auf den Innenring drehen kann.

Gemäß einem bevorzugen Merkmal der Erfindung wird das integrierte schaltbare Wellenlager in Zusammenhang mit einem Hilfsantriebselement der Brennkraftmaschine verwendet, wie zu Beispiel einer Wasserpumpe, welche, um eine schnellere Aufwärmung des Motors nach einem Kaltstart zu ermöglichen, abgeschaltet werden kann, und danach je nach der Temperatur des Kühlmittels an- oder ausgeschaltet werden kann, um Energie zu sparen und die auf den Motor wirkende Last zu reduzieren.

Gemäß einem anderen Merkmal sind die Kupplungsfinger entgegen einer Nachstellkraft eines Materials des Kupplungsfingers elastisch biegbar. In einer bevorzugten Ausführung sind der Kupplungsring und die Kupplungsfinger aus einem Federstahl gefertigt.

Gemäß einem anderen Merkmal ist es bevorzugt, dass die Nockenstifte mit einer Nockenstiftscheibe, welche bevorzugt eine Ringform hat, verbunden sind. Die Nockenstifte weisen vorzugsweise auch eine unterhalb des Nockenabschnitts angeordnete Stufe auf, so dass, bei einer Bewegung der Nockenstifte in die entkoppelte Stellung der Stufenabschnitt des Nockenstifts immer noch unter den Kupplungsfingern verbleibt, um ein Verklemmen zu vermeiden, wenn der Aktuator die Nockenstifte in eine gekoppelte Stellung bewegt.

Vorzugsweise ist der Innenring mit einer Welle verbunden und der Aktuator weist eine Feder auf, die auf die Nockenstiftscheibe wirkt, um diese in Richtung zur gekoppelten Stellung hin vorzuspannen. Ein Elektromagnet wirkt auf die Nockenstiftscheibe, um diese zusammen mit den zugehörigen Nockenstiften in die entkoppelte Stellung zu bewegen. In einer bevorzugten Ausführung weist die Welle eine Stufe auf, wobei die Feder an einem Ende auf dieser Stufe und am anderen Ende gegen die Nockenstiftscheibe abgestützt ist, so dass die Feder die Nockenstiftscheibe zur gekoppelten Stellung hin vorgespannt ist und der Elektromagnet dazu verwendet wird, die Nockenstiftscheibe in die entkoppelte Stellung zu bewegen. Je nach gewünschtem nicht bestromten Zustand des Elektromagneten, wäre es ebenso möglich, die Feder zum Vorspannen der Nockenstiftscheibe zur entkoppelten Stellung hin und den Elektromagneten zum Halten der Nockenstiftscheibe in der gekoppelten zu verwenden.

Ein Vorteil der Tatsache, dass der Aktuator einen Elektromagneten aufweist, liegt darin, dass der Elektromagnet die Nockenstiftscheibe in einer festgelegten Stelle hält und dass die Nockenstifte eine Rotation des Innenrings verhindern und somit auch eine Rotation der angebunden Welle.

In einer bevorzugten Anordnung ist die Welle Teil eines Hilfsantriebs, welcher ein Gehäuse aufweist, und der Elektromagnet ist auf diesem Gehäuse gelagert. In einer bevorzugten Anwendung ist der Hilfsantrieb eine Wasserpumpe. Vorzugsweise ist in dieser Anordnung eine Antriebsscheibe am Außenfing angeordnet, so dass ein Drehmoment von einem mit der Kurbelwelle in Eingriff stehenden Riemen übertragen werden kann.

In einer bevorzugten Anordnung sind die Wälzkörper als Kugeln ausgebildet; es ist jedoch möglich, auch andere Arten von Wälzkörpern wie z.B. Rollen zu verwenden. Vorzugsweise werden die Kugeln in einem Käfig voneinander beabstandet gehalten. In einer bevorzugten Anordnung bilden der Innenrings, der Außenring und die Kugeln ein Dreipunktkugellager.

Um die Montage zu erleichtern weist der Kupplungsring vorzugsweise mindestens einen sich radial erstreckenden Schlitz auf; es ist jedoch auch möglich, alternative Anordnungen für den Einbau eines Kupplungsrings aus einem oder mehreren Teilen in dem im Innenring angeordneten Kupplungsschlitz vorzusehen.

### Kurze Beschreibung der Zeichnungen

Die vorhergehende Zusammenfassung und die folgende ausführliche Beschreibung werden besser verstanden werden, wenn man sie in Kombination mit den beigefügten Zeichnungen liest, welche eine bevorzugte Ausführung der Erfindung veranschaulichen. Es zeigen:
Figur 1 eine Querschnittsansicht durch ein integriertes schaltbares Wellenlager gemäß einer bevorzugten Ausführung der Erfindung,
Figur 2 eine vergrößerte Ansicht in axialer Richtung, in der der Außenring, der Innenring, ein Wälzkörper und die Kupplung mit einem Kupplungsring zu sehen sind, wobei zum Übertragen eines Drehmoments, die Kupplungsfinger den Innenring mit dem Außenring verriegeln,
Figur 3 eine Querschnittsansicht entlang der Linie 3-3 in Figur 2,
Figur 4 eine vergrößerte Querschnittsansicht ähnlich der Figur 2, wobei die Kupplungsfinger am Kupplungsring sich in einer entkoppelten Stellung befinden, so dass der Außenring durch die Wälzkörper sich relativ zum Innenring drehen kann,
Figur 5 eine Querschnittsansicht entlang der Linie 5-5 in Figur 4,
Figur 6 eine Detailansicht in einer axialen Richtung des Kupplungsrings,
Figur 7 eine Detailansicht in der axialen Richtung des Innenings,
Figur 8 eine Querschnittsansicht entlang der Linie 8-8 in Figur 7,
Figur 9 eine Detailansicht, in der der Kupplungsring in der im Innenring angeordneten Kupplungsnut montiert zu sehen ist,
Figur 10 eine Querschnittsansicht entlang der Linie 10-10 in Figur 9,
Figur 11 eine perspektive Detailansicht der Nockenstiftscheibe, und
Figur 12 eine vergrößerte Teilansicht der Nockenstiftscheibe, wobei das Profil eines bevorzugten Nockenstifts zu sehen ist.

### Ausführliche Beschreibung der bevorzugten Ausführungen

Bestimmte, in der nun folgenden Beschreibung verwendete Begriffe dienen lediglich der Bequemlichkeit und sind keineswegs als einschränkend zu verstehen. Die Begriffe "vorder...", "hinter...", "ober..." und "unter..." beziehen sich auf Richtungen in den Zeichnungen, auf welche hierin Bezug genommen wird. Die Begriffe "nach innen" und "nach außen" beziehen sich auf Richtungen zu oder weg von den in den Zeichnungen mit Bezugszahlen gekennzeichneten Teilen. "Axial" bezieht sich auf eine Richtung entlang einer Achse einer Welle oder eines sich drehenden Teils. Ein Bezug auf eine Liste von Posten bzw. Teilen mit der Formulierung "mindestens eines von a, b, oder c", (worin a, b und c für die aufgezählten Posten stehen), bedeutet irgendeinen der aufgelisteten Posten a, b, c oder Kombinationen aus diesen Posten. Die Terminologie schließt die konkret genannten Begriffe. Ableitungen daraus und Begriffe mit ähnlicher Bedeutung ein.

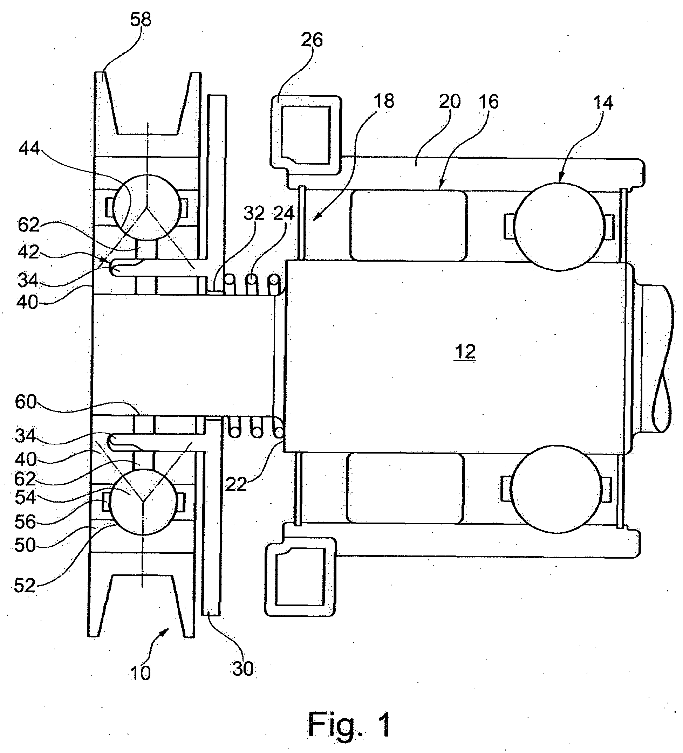

Fig. 1 ist eine ausführliche Darstellung eines integrierten schaltbaren Wellenlagers 10. Das integrierte schaltbare Wellenlager 10 ist auf einer Welle 12 gezeigt, welche über Wälzkörper 14, 16 in einem Gehäuse 20 abgestützt ist. Um ein Auslaufen von Schmiermitteln und einen Eintritt von Verunreinigungen usw. zu verhindern, kann eine Dichtung 18 zwischen der Welle 12 und dem Gehäuse 20 angeordnet werden. Am gegenüberliegenden Ende kann eine zusätzliche Dichtung vorgesehen werden. Vorzugsweise weist die Welle 12 eine Schulter 22 auf.

Das schaltbare Wellenlager 10 weist einen mit einer Laufbahn 44 versehenen Innenring 40, eine umlaufende Kupplungsnut 46, welche die Laufbahn 44 an mindestens einer Stelle schneidet, sowie auch sich axial erstreckende Öffnungen 42 für Nockenstifte auf. Ein Außenring 50 ist um den Innenring 40 angeordnet und weist ebenso eine Laufbahn 52 auf. Zwischen dem Innenring 40 und dem Außenring 50 sind bevorzugt als Kugeln ausgebildete Wälzkörper 54 in den Laufbahnen 44, 52 angeordnet. Vorzugsweise werden die Wälzkörper 54 durch einen Käfig 56 voneinander beabstandet gehalten. Eine Scheibe 58 oder eine andere Art von Antriebselement wie ein Zahnrad ist vorzugsweise auf dem Außenring 50 angeordnet.

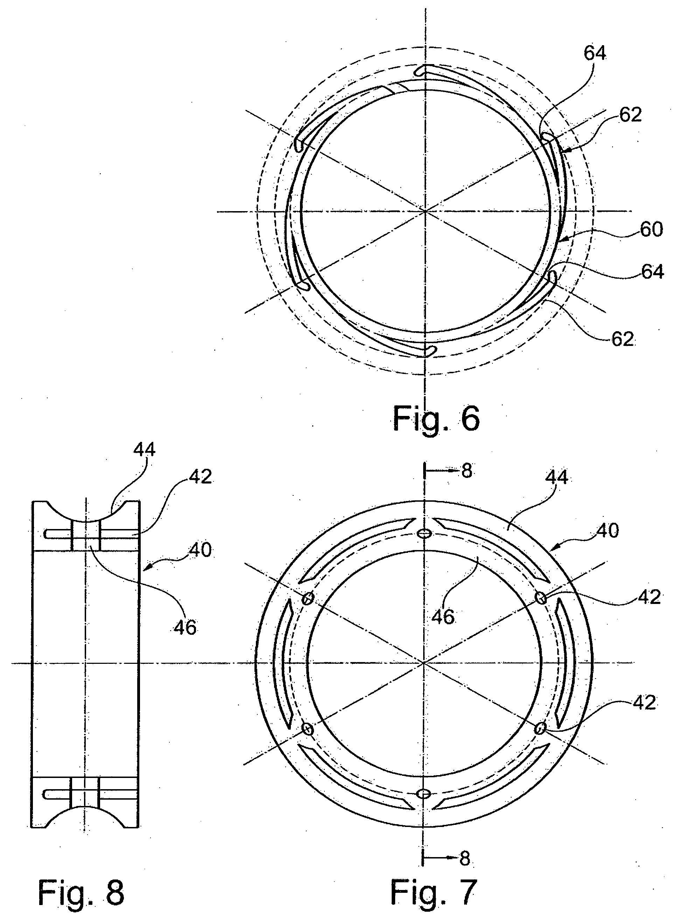

In den Figuren 1 und 6 ist ein mit Kupplungsfingern 62 versehener Kupplungsring 60 gezeigt, der in der Kupplungsnut 46 im Innenring 40 angeordnet ist. Die Kupplungsfinger 62 weisen benachbarte Freiräume 64 auf, die auf die Öffnungen 42 der Nockenstifte im Innenring 40 ausgerichtet sind.

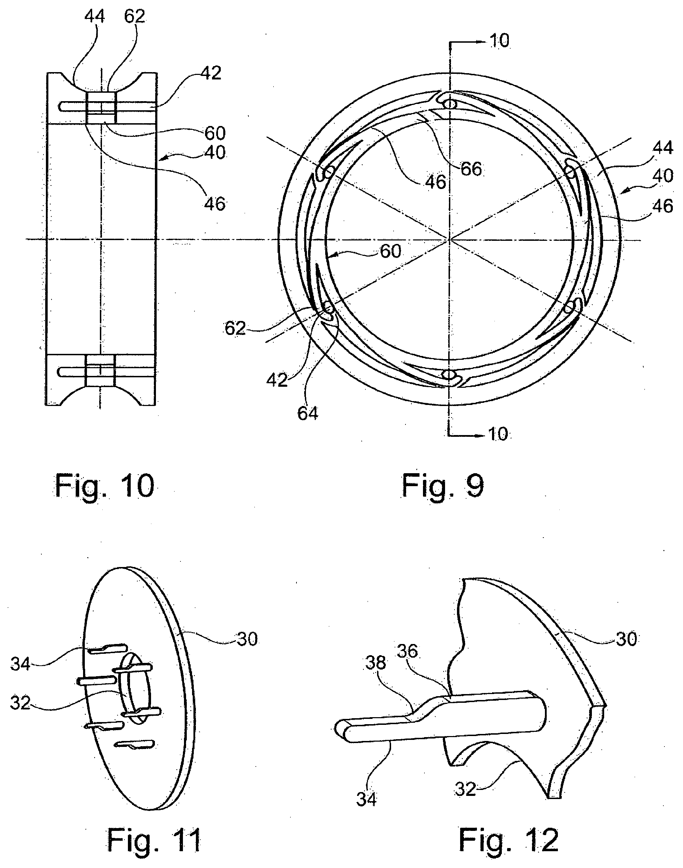

Wie im Einzelnen in den Figuren 1, 3, 5 und 9 bis 12 gezeigt, sind Nockenstifte 34 in den Stiftöffnungen 42 im Innenring 40 angeordnet. Die Nockenstifte 34 weisen vorzugsweise jeweils einen Nockenabschnitt 36 und eine Stufe 38 auf. In der bevorzugten Ausführung sind die Nockenstifte 34 mit einer Nockenstiftscheibe 30 verbunden, die im Einzelnen in den Figuren 11 und 12 gezeigt ist. In einer bevorzugten Ausführung sind sechs Nockenstifte 34 vorgesehen, welche auf sechs Nockenstiftöffnungen 42 ausgerichtet und durch diese hindurch geführt und in den Innenring 40 eingesetzt sind, und zwar in einer Stellung in der die Nockenstifte 34 sich durch die Freiräume unterhalb der Kupplungsfinger 62 des Kupplungsrings 60 erstrecken. Die Kupplungsfinger 62 sind elastisch federnd gegen eine Rückstellkraft des Materials der Kupplungsfinger ausgebildet. Vorzugsweise ist der Kupplungsring 60 aus einem Federstahl gefertigt.

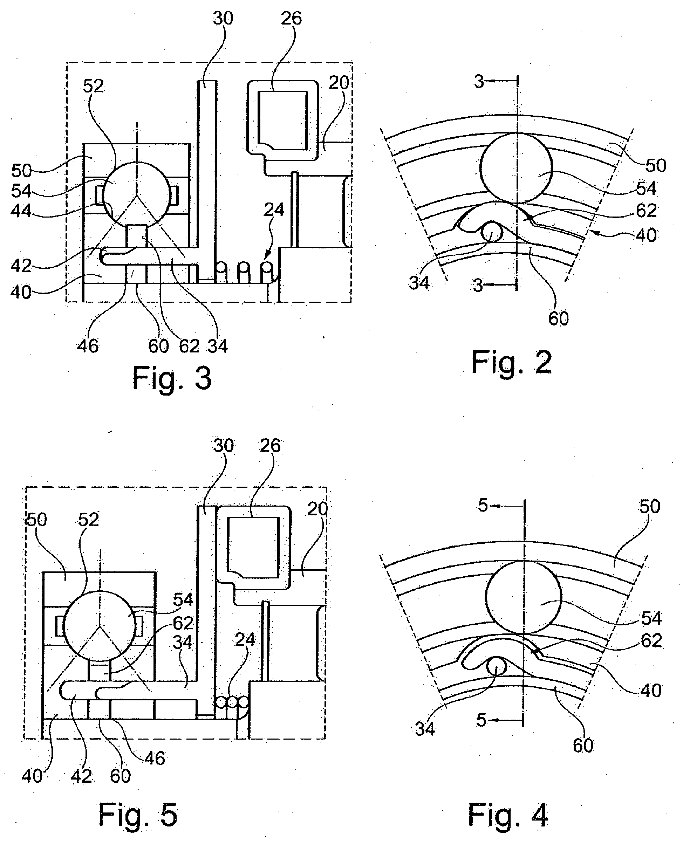

Bezugnehmend nochmals auf Fig. 1: Ein vorzugweise mit einem Elektromagneten 26 und einer Feder 24 versehener Aktuator bewegt die Nockenstifte 34 aus einer, im Einzelnen in den Figuren 2 und 3 gezeigten Eingriffsstellung, in der die Nockenabschnitte 36 jeweils mit einem der Kupplungsfinger 62 in Eingriff stehen, nach außen in eine oberhalb einer Laufbahnfläche des Innenrings 40 befindliche Stelle, so dass die Kupplungsfinger 62 nun in Eingriff mit den Wälzkörpern 54 kommen. Hierdurch kann ein Drehmoment von dem Außenring 50 auf den Innenring 40 übertragen werden kann. Der Aktuator kann in eine entkoppelte Stellung bewegt werden, in der, wie in den Figuren 4 und 5 gezeigt, die Nockenabschnitte 36 der Nockenstifte 34 außer Eingriff mit den Kupplungsfingern 62 sind. In dieser Stellung bewegen sich die Kupplungsfinger 62 unter die Laufbahnfläche des Innenrings 40, so dass die Wälzkörper 54 sich auf der Laufbahn 44 des Innenrings 40 bewegen können und der Außenring 50 sich mittels der Wälzkörper 54 in Bezug auf den Innenring 40 drehen kann, so dass kein Drehmoment übertragen wird.

Vorzugsweise ist der Innenring 40 mit der Welle 12 verbunden, und die Feder 24 des Aktuators wirkt auf die Nockenstiftscheibe 30, um diese, wie in den Figuren 1-3 gezeigt, in Richtung der gekoppelten Stellung hin vorzuspannen. Der Elektromagnet 26, der vorzugsweise auf dem Gehäuse 20 gelagert ist, wird bestromt, um gegen Kraft der Feder 24 auf die Nockenstiftscheibe 30 zu wirken, um diese derart zu bewegen, dass, wie in den Figuren 4 und 5 gezeigt, die Nockenstifte 34 sich jetzt in der entkoppelten Stellung befinden. Wenn der Stromfluss an den Elektromagneten 26 unterbrochen wird, wirkt die Feder 24 auf die Nockenstiftscheibe 30, um die Nockenstifte 34 wieder zurück in die gekoppelte Stellung zu bewegen, so dass ein Drehmoment von dem Außenring 50 an den Innenring 40 des integrierten schaltbaren Wellenlagers übertragen wird, so dass zum Beispiel eine Wasserpumpe der Brennkraftmaschine angetrieben wird.

Ein Fachmann auf dem Gebiet wird erkennen, dass der Aktuator auch derart angeordnet werde könnte, dass die Nockenstifte 34 sich im nicht bestromten Zustand des Elektromagneten 26 in der entkoppelten Stellung befinden, und durch Bestromung des Elektromagneten 26 in die gekoppelte Stellung bewegt werden.

Ein Vorteil der Nockenstiftscheibe 30 besteht darin, dass, wie in Figur 5 gezeigt, wenn der Elektromagnet 26 bestromt wird, der Elektromagnet 26 die Nockenstiftscheibe 30 in einer festgelegten Stellung hält und, da die Nockenstifte 34 in Eingriff in den Stiftöffnungen 42 in dem sich auf der Welle 12 befindlichen Innenring 40 bleiben, verhindern die Nockenstifte 34 eine Drehung des Innenrings 40 sowie auch der Welle 12. In einer bevorzugten Anordnung, in der die Welle 12 Teil eines Hilfsantriebs wie einer Wasserpumpe in einer Brennkraftmaschine ist, bildet das Gehäuse 20 ein Teil des Gehäuses der Wasserpumpe und der Elektromagnet 26 auf diesem Gehäuse 20 gelagert ist

Vorzugsweise sind die Wälzkörper 54 als Kugeln für ein Kugellager ausgebildet und der Innenring 40, der Außenring 50 und die Kugeln bilden ein Dreipunktkugellager. Während Kugeln bevorzugt verwendet werden, wird ein Fachmann erkennen, dass die Wälzkörper 54 auch Rollen sein können.

Die Figuren 7 und 8 sind Detaildarstellungen des Innenrings 40 und zeigen dass die Kupplungsnut 46 die Laufbahn 44 mindestens in den oberhalb der Stiftöffnungen 42 liegenden Bereichen schneiden. Die Figuren 9 und 10 zeigen den Zusammenbau des Kupplungsrings 60 mit dem Innenring 40. Um den Einbau des Kupplungsrings 60 zu ermöglichen, ist dieser mit einem Schlitz 66 versehen, so dass er beim Zusammenbau zu einem kleineren Durchmesser zusammengeklappt werden kann und danach in die vorgesehene Stelle in der Kupplungsnut 46 wieder ausgeklappt werden kann. Wenn die Nockenstiftscheibe 30 in Stellung gebracht wird, ist der Kupplungsring 60 über die Nockenstifte 34 in seiner gewünschten Stellung verriegelt.

Während eine bevorzugte Anordnung des Aktuators den Elektromagneten 26, der die Nockenstiftscheibe 30 anzieht, dazu verwendet, die Nockenstifte 34 in die entkoppelte Stellung zu bewegen, und die Feder 24 dazu verwendet, die Nockenstifte 34 zurück in die gekoppelte Stellung zu zwängen, wenn die Stromzufuhr zum Elektromagneten 26 abgeschaltet ist, wird es einem Fachmann klar sein, dass auch andere Arten von Aktuators wie zum Beispiel ein hydraulischer Aktuator verwendet werden kann.

Das integrierte schaltbare Wellenlager 10 kann in Verbindung mit verschiedenen Hilfsantriebselementen einer Brennkraftmaschine für einen KFZ wie zum Beispiel einem Kompressor einer Klimaanlage, einem Starter/Generator, einer Wasserpumpe oder anderen Bauteilen, die nicht während der gesamten Betriebszeit der Brennkraftmaschine in Betrieb sein müssen, verwendet werden. Außerdem kann das integrierte schaltbare Wellenlager 10 auch in anderen Anwendungen zum Einsatz kommen.

Nach der vorhergehenden ausführlichen Beschreibung der vorliegenden Erfindung, muss es verstanden werden und für den Fachmann klar und naheliegend sein, dass zahlreiche physische Änderungen, von denen nur einige in der vorhergehenden ausführlichen Beschreibung beispielhaft angeführt sind, vorgenommen werden könnten, ohne die hierin verkörperten erfinderischen Ideen und Prinzipien zu verändern. Es muss auch verstanden werden, dass zahlreiche Ausführungen, welche nur Teile der bevorzugten Ausführung beinhalten, möglich sind, und, mit Bezug auf diese Teile die hierin verkörperten erfinderischen Ideen und Prinzipien der Erfindung nicht verändern. Aus diesem Grund sind die vorliegende Ausführung und optionale Ausbildungen der Erfindung in jeder Hinsicht als beispielhaft und/oder als erklärend und nicht als einschränkend zu verstehen, weil der Schutzbereich der Erfindung durch die angeführten Ansprüche angegeben wird und nicht durch die vorhergehende Beschreibung, so dass alle alternativen Ausführungen und an der vorliegenden Ausführung vorgenommenen Änderungen, welche im Sinne der Ansprüche zu verstehen sind und im Gleichwertigkeitsbereich der Ansprüche liegen, somit durch die Ansprüche abgedeckt sind.

## Patentansprüche

1. Integriertes schaltbares Wellenlager (16) aufwsisend:
einen mit einer Laufbahn versehen Innenring (40), eine sich über den Umfang des Innenrings erstreckende Kupplungsnut (46), welche die Laufbahn an mindestens einer Stelle schneidet, und sich axial erstreckende Öffnungen (42) für Nockenstifte (34),
einen eine Laufbahn aufweisenden Außenring (50),
zwischen dem Innenring und dem Außenring in den Laufbahnen angeordnete Wälzkörper (54),
einen mit Kupplungsfingern (62) versehenen, in der Kupplungsnut (46) angeordneten Kupplungsring (60), wobei die Kupplungsfinger einander benachbarte Freiräume (69) aufweist, die auf die Öffnungen für Stifte ausgerichtet sind,
Nockenstifte (34), die in den Öffnungen (42) für Stifte angeordnet sind und jeweils einen Nockenabschnitt aufweisen, und
einen Aktuator (26), der die Nockenstifte (34) aus einer Eingriffsstellung, in der die Nockenabschnitte jeweils mit einem der Kupplungsfinger in Eingriff stehen, und die Kupplungsfinger (62) nach außen hin in eine oberhalb einer Lauffläche des Innenrings (40) liegende Stelle in eine gekoppelte Stellung zwängen, so dass die Kupplungsfinger (62) mit den Wälzkörpern (54) in Eingriff kommen, in einer gelösten Stellung in der kein Drehmoment von dem Außenring (50) auf den Innenring (40) übertragen wird und die Nockenabschnitte der Nockenstifte (34) außer Eingriff mit den Kupplungsfingern sind, welche sich jetzt in eine unterhalb der Lauffläche des Innenrings liegenden Stelle befinden, bewegt, so dass der Außenring (50) sich mittels der Wälzkörper (54) in Bezug auf den Innenring (40) drehen kann.

2. Integriertes schaltbares Wellenlager gemäß Anspruch 1, wobei die Kupplungsfinger (62) entgegen einer Nachstellkraft des Materials des Kupplungsfingers elastisch biegbar sind.

3. Integriertes schaltbares Wellenlager gemäß Anspruch 1, wobei die Nockenstifte (34) mit einer Nockenstiftscheibe verbunden sind.

4. Integriertes schaltbares Wellenlager gemäß Anspruch 3, wobei die Nockenstifte (34) eine unterhalb des Nockenabschnitts liegende Stufe aufweisen.

5. Integriertes schaltbares Wellenlager gemäß Anspruch 3, wobei der Innenring mit einer Welle verbunden ist und der Aktuator eine Feder aufweist, die auf die Nockenstiftscheibe (30) wirkt, um die Nockenstiftscheibe in Richtung zur gekoppelten Stellung hin vorzuspannen, und ein Elektromagnet (26) aufweist, der auf die Nockenstiftscheibe wirkt, um diese in die gelöste Stellung zu bewegen.

6. Integriertes schaltbares Wellenlager gemäß Anspruch 5, wobei die Welle eine Stufe (22) aufweist und die Feder (24) an einem Ende auf dieser Stufe und am anderen Ende gegen die Nockenstiftscheibe abgestützt ist.

7. Integriertes schaltbares Wellenlager gemäß Anspruch 5, wobei der Elektromagnet (26) die Nockenstiftscheibe (30) in einer festgelegten Stelle hält und die Nockenstifte eine Rotation des inneren Rings verhindern.

8. Integriertes schaltbares Wellenlager gemäß Anspruch 5, wobei die Welle (12) Teil eines Hilfsantriebs ist, welcher ein Gehäuse (26) aufweist, und der Elektromagnet (26) auf diesem Gehäuse gelagert ist.

9. Integriertes schaltbares Wellenlager (10) gemäß Anspruch 8, wobei der Hilfsantrieb eine Wasserpumpe ist.

10. Integriertes schaltbares Wellenlager gemäß Anspruch 1, wobei eine Antriebsscheibe (58) auf dem Außenring (50) angeordnet ist.

11. Integriertes schaltbares Wellenlager gemäß Anspruch 1, wobei die Wälzkörper Kugeln (54) sind.

12. Integriertes schaltbares Wellenlager gemäß Anspruch 11, wobei die Kugeln voneinander beabstandet in einem Käfig (56) gehalten sind.

13. Integriertes schaltbares Wellenlager gemäß Anspruch 11 , wobei der Innenring (40), der Außenring (50) die Kugeln (54) ein Dreipunktkugellager bilden.

14. Integriertes schattbares Wellenlager (10) gemäß Anspruch 1, wobei der Kupplungsring einen sich radial erstreckenden Schlitz aufweist.

## Claims

1. Integrated switchable shaft bearing (10) having:
an inner ring (40) which is provided with a raceway, a coupling groove (46) which extends over the circumference of the inner ring and intersects the raceway at at least one location, and axially extending openings (42) for cam pins (34),
an outer ring (50) which has a raceway,
rolling bodies (54) which are arranged in the raceways between the inner ring and the outer ring,
a coupling ring (60) which is provided with coupling fingers (62) and is arranged in the coupling groove (46), the coupling fingers having clearances (69) which are adjacent with respect to one another and are oriented towards the openings for pins,
cam pins (34) which are arranged in the openings (42) for pins and in each case have a cam section, and
an actuator (26) which moves the cam pins (34) out of an engagement position, in which the cam sections are in engagement in each case with one of the coupling fingers and force the coupling fingers (62) outwards into a location which lies above a running face of the inner ring (40) into a coupled position, with the result that the coupling fingers (62) come into engagement with the rolling bodies (54), in a released position, in which no torque is transmitted from the outer ring (50) to the inner ring (40) and the cam sections of the cam pins (34) are out of engagement with the coupling fingers which are now situated at a location which lies below the running face of the inner ring, with the result that the outer ring (50) can rotate in relation to the inner ring (40) by means of the rolling bodies (54).

2. Integrated switchable shaft bearing according to Claim 1, the coupling fingers (62) being elastically flexible counter to a resetting force of the material of the coupling finger.

3. Integrated switchable shaft bearing according to Claim 1, the cam pins (34) being connected to a cam pin disc.

4. Integrated switchable shaft bearing according to Claim 3, the cam pins (34) having a step which lies below the cam section.

5. Integrated switchable shaft bearing according to Claim 3, the inner ring being connected to a shaft, and the actuator having a spring which acts on the cam pin disc (30), in order to prestress the cam pin disc in the direction of the coupled position, and having an electromagnet (26) which acts on the cam pin disc, in order to move it into the released position.

6. Integrated switchable shaft bearing according to Claim 5, the shaft having a step (22), and the spring (24) being supported at one end on the said step and at the other end against the cam pin disc.

7. Integrated switchable shaft bearing according to Claim 5, the electromagnet (26) holding the cam pin disc (30) at a fixed location, and the cam pins preventing a rotation of the inner ring.

8. Integrated switchable shaft bearing according to Claim 5, the shaft (12) being part of an auxiliary drive which has a housing (20), and the electromagnet (26) being mounted on the said housing.

9. Integrated switchable shaft bearing (10) according to Claim 8, the auxiliary drive being a water plump.

10. Integrated switchable shaft bearing according to Claim 1, a drive disc (58) being arranged on the outer ring (50).

11. Integrated switchable shaft bearing according to Claim 1, the rolling bodies being balls (54).

12. Integrated switchable shaft bearing according to Claim 11, the balls being held spaced apart from one another in a cage (56).

13. Integrated switchable shaft bearing according to Claim 11, the inner ring (40), the outer ring (50) and the balls (54) forming a three-point ball bearing.

14. Integrated switchable shaft bearing (10) according to Claim 1, the coupling ring having a radially extending slot.

## Revendications

1. Palier d'arbre commutable intégré (10), présentant
une bague interne (40) pourvue d'un chemin de roulement, une rainure d'accouplement (46) s'étendant sur la périphérie de la bague interne, qui coupe le chemin de roulement en au moins un emplacement et des ouvertures s'étendant axialement (42) pour des broches de came (34),
une bague externe (50) présentant un chemin de roulement,
des corps de roulement (54) disposés entre la bague interne et la bague externe dans les chemins de roulement,
une bague d'accouplement (60) pourvue de doigts d'accouplement (62), disposée dans la rainure d'accouplement (46), les doigts d'accouplement présentant des espaces libres (64) adjacents les uns aux autres qui sont orientés vers les ouvertures pour des broches,
des broches de came (34) qui sont disposées dans les ouvertures (42) pour les broches et qui présentent à chaque fois une portion de came, et un actionneur (26) qui déplace les broches de came (34) depuis une position d'engagement, dans lequel les portions de came sont à chaque fois en prise avec l'un des doigts d'accouplement et forcent les doigts d'accouplement (62) vers l'extérieur dans une position située au-dessus d'une surface de roulement de la bague interne (40) dans une position accouplée, de telle sorte que les doigts d'accouplement (62) viennent en prise avec les corps de roulement (54), dans une position libérée dans lequel aucun couple n'est transmis de la bague externe (50) à la bague interne (40) et les portions de came des broches de came (34) ne sont pas engagées avec les doigts d'accouplement, qui se trouvent à présent dans une position située en dessous de la surface de roulement de la bague interne, de sorte que la bague externe (50) puisse tourner par rapport à la bague interne (40) au moyen des corps de roulement (54).

2. Palier d'arbre commutable intégré selon la revendication 1, dans lequel les doigts d'accouplement (62) peuvent fléchir à l'encontre d'une force de rappel élastique du matériau du doigt d'accouplement.

3. Palier d'arbre commutable intégré selon la revendication 1, dans lequel les broches de came (34) sont connectées à un disque de broches de came.

4. Palier d'arbre commutable intégré selon la revendication 3, dans lequel les broches de came (34) présentent un gradin situé en dessous de la portion de came.

5. Palier d'arbre commutable intégré selon la revendication 3, dans lequel la bague interne est connectée à un arbre et l'actionneur présente un ressort qui agit sur le disque de broches de came (30) afin de précontraindre le disque de broches de came dans la direction de la position accouplée et présente un électroaimant (26) qui agit sur le disque de broches de came afin de le déplacer dans la position libérée.

6. Palier d'arbre commutable intégré selon la revendication 5, dans lequel l'arbre présente un gradin (22) et le ressort (24) s'appuie à une extrémité sur ce gradin et à l'autre extrémité contre le disque de broches de came.

7. Palier d'arbre commutable intégré selon la revendication 5, dans lequel l'électroaimant (26) retient le disque de broches de came (30) dans une position fixe et les broches de came empêchent une rotation de la bague interne.

8. Palier d'arbre commutable intégré selon la revendication 5, dans lequel l'arbre (12) fait partie d'un entraînement auxiliaire qui présente un boîtier (20) et l'électroaimant (26) est supporté sur ce boîtier.

9. Palier d'arbre commutable intégré (10) selon la revendication 8, dans lequel l'entraînement auxiliaire est une pompe à eau.

10. Palier d'arbre commutable intégré selon la revendication 1, dans lequel un disque d'entraînement (58) est disposé sur la bague externe (50).

11. Palier d'arbre commutable intégré selon la revendication 1, dans lequel les corps de roulement sont des billes (54).

12. Palier d'arbre commutable intégré selon la revendication 11, dans lequel les billes sont retenues à distance les unes des autres dans une cage (56).

13. Palier d'arbre commutable intégré selon la revendication 11, dans lequel la bague interne (40), la bague externe (50) et les billes (54) forment un roulement à billes à trois points.

14. Palier d'arbre commutable intégré (10) selon la revendication 1, dans lequel la bague d'accouplement présente une fente s'étendant radialement.
